(19) Europäisches Patentamt / European Patent Office / Office européen des brevets

(11) **EP 2 745 223 B1**

(12) **FASCICULE DE BREVET EUROPEEN**

(45) Date de publication et mention de la délivrance du brevet:
**17.01.2024 Bulletin 2024/03**

(21) Numéro de dépôt: **12772118.1**

(22) Date de dépôt: **14.08.2012**

(51) Classification Internationale des Brevets (IPC):
**G06F 30/15** (2020.01)   **G06F 30/20** (2020.01)

(52) Classification Coopérative des Brevets (CPC):
**G06F 30/20; G06F 30/15**

(86) Numéro de dépôt international:
**PCT/FR2012/051903**

(87) Numéro de publication internationale:
**WO 2013/024231 (21.02.2013 Gazette 2013/08)**

(54) **PROCEDE DE DETERMINATION DES PERFORMANCES D'AU MOINS UNE HELICE D'UNE TURBOMACHINE DANS UN FLUX D'AIR EN GIRATION**

**VERFAHREN ZUR BERECHNUNG DER KENNGRÖSSEN EINES TURBOROTORS IN EINEM ROTIERENDEN LUFTSTROM**

**METHOD FOR DETERMINING THE PERFORMANCE OF A ROTOR OF A TURBOMACHINE IN A ROTATING AIR FLOW**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.08.2011 FR 1157373**

(43) Date de publication de la demande:
**25.06.2014 Bulletin 2014/26**

(73) Titulaire: **Safran Aircraft Engines
75015 Paris (FR)**

(72) Inventeur: **TANTOT, Nicolas Jérôme Jean
F-77550 Moissy Cramayel Cedex (FR)**

(74) Mandataire: **Gevers & Orès
9 rue St Antoine du T
31000 Toulouse (FR)**

(56) Documents cités:
**GB-A- 2 220 712**

• **Grant Ingram: "Basic Concepts in Turbomachinery, Chapter 7", BookBoon.com , 1 janvier 2009 (2009-01-01), pages 83-93, XP002687521, Extrait de l'Internet: URL:http://web.iitd.ac.in/~pmvs/mel346/ebook2.pdf [extrait le 2012-11-15]**

EP 2 745 223 B1

**EP 2 745 223 B1**

**Description**

La présente invention concerne un procédé de détermination des performances d'au moins une hélice d'une turbomachine et, plus particulièrement, la détermination des performances d'un doublet d'hélices contrarotatives pour la propulsion d'un aéronef.

L'art antérieur comprend les documents XP002687521 (Grant Ingram : Basic Concepts in Turbomachinery, Chapter 7 » et GB-A-220712.

Lors du développement d'un nouveau type de turbomachine, il est connu de déterminer les performances de la turbomachine de manière théorique au moyen d'un modèle thermodynamique numérique représentant la turbomachine. Grâce au modèle thermodynamique, on peut déterminer les grandeurs fondamentales (pressions, températures, débits fluides) régissant le fonctionnement de la turbomachine au moyen d'un calculateur, et en déduire les efforts appliqués à cette dernière pour des conditions opérationnelles données (altitude, vitesse d'avancement de l'avion, consignes de régulation de la turbomachine, etc.). La mise en oeuvre de ce modèle dans le cadre d'une turbomachine comportant une hélice comprend également la détermination des performances de traction et de puissance de ladite hélice. L'utilisation du modèle thermodynamique est indispensable à la prédiction de la performance de la turbomachine dans l'intégralité de son domaine d'opération, et alimente la conception et l'optimisation de l'ensemble des composants qu'elle comporte. La connaissance anticipée du modèle thermodynamique de la turbomachine permet de limiter le recours aux essais partiels de composants et d'orienter de manière pertinente l'optimisation de la conception de ces derniers, contribuant d'autant à la réduction du coût et du cycle de développement d'une turbomachine.

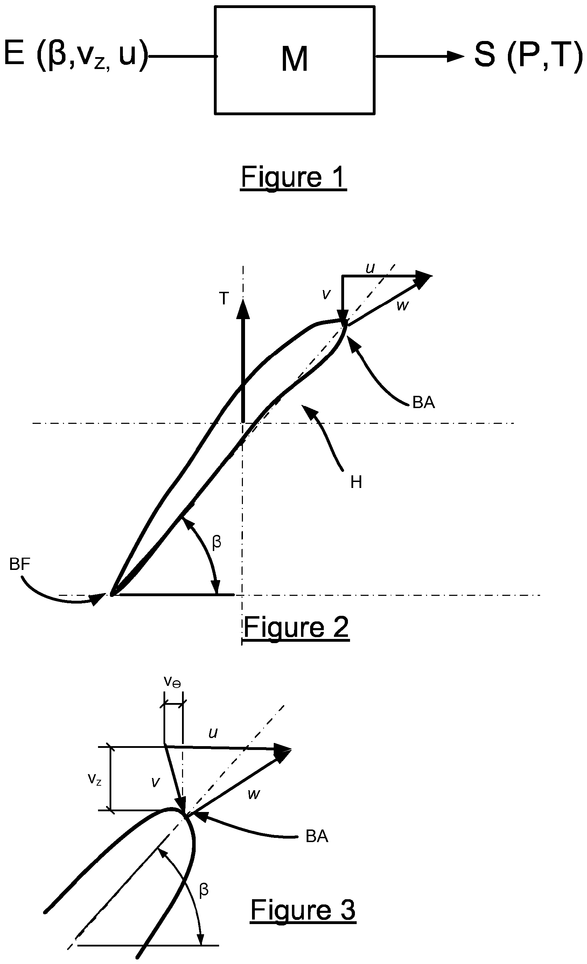

En référence à la figure 1, on connaît dans l'art antérieur un procédé de détermination des performances d'une unique hélice de turbomachine dans lequel l'hélice de la turbomachine est classiquement modélisée par un modèle théorique M se présentant sous la forme d'un tableau comportant un ensemble de coefficients adimensionnels dont un coefficient d'avancement J, un coefficient de puissance CP et un coefficient de traction CT définis pour une pluralité d'angles de calage de l'hélice $\beta$, pour une pluralité de vitesses de flux d'air incident axial $V_z$ et pour une pluralité de vitesses périphériques de rotation hélice u. Grâce à ce modèle théorique M, on peut alors déterminer les performances de l'hélice en temps réel et obtenir, en sortie S du modèle M, la traction T et la puissance P de l'hélice pour un angle de calage $\beta$, une vitesse périphérique de rotation hélice u et une vitesse de flux d'air incident axial $V_z$ donnés.

Afin de limiter la consommation en carburant et limiter les émissions de CO2, il a été proposé des turbomachines comportant un doublet d'hélices contrarotatives. Le très faible taux de compression de chaque hélice minimise les pertes par énergie cinétique, ce qui assure un rendement propulsif proche de la valeur maximale théorique. En outre, la répartition de la compression globale sur deux hélices successives autorise une réduction significative du diamètre de ces dernières par rapport à une hélice simple conventionnelle, limitant ainsi notablement les contraintes d'intégration dimensionnelle de la turbomachine sur l'aéronef.

Au cours du fonctionnement des hélices du doublet, la première hélice amont reçoit un flux d'air axial et le dévie tangentiellement. La deuxième hélice aval reçoit ainsi un flux d'air incident qui comporte une giration. Le flux d'air reçu par la deuxième hélice n'étant pas axial, la deuxième hélice ne peut pas être modélisée par un modèle théorique selon l'art antérieur.

La contrarotativité de la seconde hélice par rapport à la première autorise la compensation de la giration résiduelle en sortie de la première hélice, assurant ainsi un écoulement quasi axial à la sortie du doublet d'hélices, ce qui améliore le rendement de la compression de la turbomachine. Le fonctionnement de ces deux hélices repose globalement sur le principe d'hélices conventionnelles, chaque hélice étant pourvue d'un mécanisme de changement de pas individuel, permettant un contrôle séparé de la vitesse de rotation de chaque hélice.

La modélisation globale d'un doublet d'hélices contrarotatives est connue pour certaines conditions de fonctionnement prédéterminées, à l'aide de méthodes aérodynamiques complexes. En dehors de ces points, il n'est pas possible de modéliser de manière rapide et précise le fonctionnement du doublet d'hélices. En particulier, il n'est pas possible, à l'aide de la modélisation connue, de déterminer les performances d'un doublet d'hélices contrarotatives pour un premier angle de calage donné de la première hélice et pour un deuxième angle de calage donné de la deuxième hélice. En pratique, la modélisation du doublet d'hélices pour des conditions de fonctionnement spécifiques nécessite plusieurs heures de calcul ce qui empêche toute détermination en temps réel.

Un des buts de la présente invention est de déterminer en temps réel les performances d'une turbomachine comportant un doublet d'hélices pour des conditions de fonctionnement variées, en particulier, pour n'importe quelle combinaison de conditions d'écoulement d'un flux d'air incident, d'angle de calage des aubes des hélices et de vitesse périphérique de rotation hélice.

De manière plus générale, l'invention vise à déterminer les performances d'au moins une hélice de turbomachine pour diverses combinaisons de paramètres d'entrée, en particulier, pour un flux d'air incident comportant une composante tangentielle.

A cet effet, l'invention concerne un procédé de détermination des performances d'au moins une hélice aval de turbomachine placée derrière une hélice amont de même axe créant pour ladite hélice aval un flux d'air incident en giration comportant une composante axiale et une composante tangentielle, ladite hélice aval étant modélisée par un modèle théorique généralisé défini, pour une pluralité d'angles de calage de l'hélice aval, par un ensemble de coefficients adimensionnels dont au moins un coefficient d'avancement généralisé $J_g$, un coefficient de puissance généralisé $CP_g$ et un coefficient de traction généralisé $CT_g$ définis par les formules suivantes :

$$\begin{cases} J_g = \dfrac{v_z}{u - v_\theta} \\[2ex] C_{Tg}(\beta) = \dfrac{T(\beta)}{\rho \cdot (u - v_\theta)^2 \cdot D^2} \\[2ex] C_{Pg}(\beta) = \dfrac{P(\beta)}{\rho \cdot (u - v_\theta)^3 \cdot D^2} \end{cases}$$

formules dans lesquelles :

- u correspond à la vitesse d'entraînement de l'hélice aval,
- $V_z$ correspond à la composante axiale de la vitesse du flux d'air incident ;
- $V_\Theta$ correspond à la composante tangentielle du flux d'air incident, comptée positivement dans le sens de la vitesse d'entraînement u ;
- $\rho$ correspond à la masse volumique de l'air,
- D correspond au diamètre de l'hélice aval;
- T correspond à la traction de ladite hélice aval ;
- P correspond à la puissance de ladite hélice aval ;
- $\beta$ correspond à l'angle de calage de ladite hélice aval ;

procédé dans lequel :

- on paramètre au moyen d'un calculateur physique, le modèle théorique généralisé de l'hélice aval avec des conditions d'entrée de la turbomachine dont au moins la composante axiale et la composante tangentielle de la vitesse du flux d'air incident, l'angle de calage et la vitesse d'entraînement de l'hélice aval ; et
- on déduit du modèle théorique généralisé paramétré au moyen du calculateur physique, au moins les performances de traction et de puissance de ladite hélice aval ;
- on régule, au moyen du calculateur physique, l'angle de calage de l'hélice amont ou de l'hélice aval en se basant sur au moins les performances de traction et de puissance de ladite hélice aval déduites.

Grâce au procédé selon l'invention, on peut déterminer les performances d'une hélice pour toutes conditions de flux d'air incident, en particulier, pour un flux d'air incident comportant une composante tangentielle. Les performances individuelles d'une hélice aval d'un doublet d'hélices peuvent être déterminées de manière indépendante de l'hélice amont du doublet ce qui est avantageux. De plus, la détermination est rapide et peut être mise en oeuvre en temps réel étant donné que seul le modèle de l'hélice est modifié. De manière avantageuse, la complexité des algorithmes de détermination des performances n'est pas impactée.

De manière préférée, le procédé est mis en oeuvre par un calculateur physique au sol (ordinateur, serveur de calcul, etc.) ou embarqué dans la turbomachine.

De préférence, un calculateur de régulation de la turbomachine, par exemple, du type FADEC pour « Full Authority Digital Engine Control » permet une prédiction optimale de l'angle de calage requis pour satisfaire une consigne de rotation des hélices prédéterminée. Grâce à cette mise en oeuvre sur un tel calculateur embarqué, la turbomachine réagit de manière précise et réactive aux consignes reçues, par exemple, par le pilote de l'aéronef sur lequel est montée la turbomachine.

L'invention concerne en outre un procédé de détermination des performances d'une turbomachine comportant une première hélice amont et une deuxième hélice aval formant un doublet d'hélices contrarotatives, les première et deuxième hélices étant respectivement modélisées par un premier modèle théorique généralisé et un deuxième modèle théorique généralisé tels que définis précédemment, procédé dans lequel :

- on paramètre les modèles théoriques généralisés avec des conditions d'entrée de la turbomachine dont au moins la composante axiale $V_1(z)$ du flux d'air incident $V_1$ de la première hélice, la vitesse d'entraînement $u_1$ de la première

hélice et la vitesse d'entraînement $u_2$ de la deuxième hélice, les angles de calage $\beta 1$ de la première hélice et $\beta 2$ de la deuxième hélice ;

- on déduit du premier modèle théorique généralisé paramétré au moins les performances de traction $T_1$ et de puissance $P_1$ de la première hélice ;
- on calcule les composantes tangentielle $V_2(\Theta)$ et axiale $V_2(z)$ du flux d'air incident $V_2$ reçu par la deuxième hélice en fonction des performances de traction $T_1$ et de puissance $P_1$ de la première hélice ; et
- on déduit du deuxième modèle théorique généralisé au moins les performances de traction $T_2$ et de puissance $P_2$ de la deuxième hélice en fonction des conditions d'entrée et des composantes tangentielle $V_2(\Theta)$ et axiale $V_2(z)$ du flux d'air incident reçu par la deuxième hélice.

Grâce au procédé selon l'invention, on peut déterminer les performances d'un doublet d'hélices en mesurant les performances individuelles des hélices. De plus, la détermination est rapide et peut être mise en oeuvre en temps réel étant donné que seul le modèle de l'hélice est modifié. De manière avantageuse, la complexité des algorithmes de détermination des performances d'une turbomachine n'est pas impactée.

De préférence, la composante tangentielle du flux d'air incident reçu par la deuxième hélice est obtenue par la formule suivante :

$$V_2(\theta) = \frac{P_1}{\frac{\rho.S.u_1}{2}\left[\sqrt{\frac{2.T_1}{\rho.S} + V_1(z)^2} + V_1(z)\right]}$$

et la composante axiale du flux d'air incident reçu par la deuxième hélice est obtenue par la formule suivante :

$$V_2(z) = \sqrt{\frac{2.T_1}{\rho.S} + V_1(z)^2}$$

formules dans lesquelles S correspond à la surface du disque d'action de la première hélice.

Grâce aux formules précédentes, on obtient par calcul analytique l'ensemble des paramètres nécessaires à la détermination des performances du doublet d'hélices ce qui procure un gain de temps et permet une détermination en temps réel des performances du doublet d'hélices.

L'invention sera mieux comprise à la lecture de la description qui va suivre, donnée uniquement à titre d'exemple, et se référant aux dessins annexés sur lesquels :

- la figure 1 représente schématiquement la détermination des performances d'une hélice d'une turbomachine selon l'art antérieur (déjà commentée) ;
- la figure 2 représente une section d'une aube d'une hélice dans un flux incident axial ;
- la figure 3 représente une vue rapprochée du bord d'attaque de l'aube dans un flux incident comportant une composante axiale et une composante tangentielle ;
- la figure 4 représente schématiquement la détermination des performances d'une hélice d'une turbomachine selon l'invention dans un flux incident comportant une composante axiale et une composante tangentielle ;
- la figure 5 représente schématiquement la détermination des performances d'un doublet d'hélices contrarotatives ; et
- la figure 6 représente schématiquement la circulation d'un flux d'air entre deux hélices d'un doublet d'hélices.

Il faut noter que les figures exposent l'invention de manière détaillée pour mettre en oeuvre l'invention, lesdites figures pouvant bien entendu servir à mieux définir l'invention le cas échéant.

• **Détermination des performances d'une unique hélice**

Selon l'art antérieur, comme expliqué précédemment, une hélice est modélisée par un modèle théorique M défini, pour une pluralité d'angles de calage $\beta$, par un ensemble de coefficients adimensionnels dont au moins un coefficient d'avancement J, un coefficient de puissance CP et un coefficient de traction CT. Ce modèle M n'est valable que pour un flux incident purement axial $V_z$ et ne permet pas de modéliser une hélice dans un flux incident V comportant une composante axiale $V_z$ et une composante tangentielle Ve.

Selon l'invention, on modélise l'hélice avec un modèle théorique généralisé Mg défini, pour une pluralité d'angles de calage β, par un ensemble de coefficients adimensionnels dont au moins un coefficient d'avancement généralisé Jg, un coefficient de puissance généralisé CPg et un coefficient de traction généralisé CTg. Ce modèle généralisé Mg est valable aussi bien pour un flux incident uniquement axial $V_z$ que pour un flux incident V comportant une composante axiale $V_z$ et une composante tangentielle $V_\Theta$ En effet, un flux purement axial $V_z$ est un flux incident V dont la composante tangentielle $V_\Theta$ est nulle.

La modélisation est mise en oeuvre par un calculateur physique, de préférence, un ordinateur ou un serveur de calcul au sol ou embarqué.

Les formules d'obtention desdits coefficients généralisé Jg, CPg et CTg vont être présentées en référence aux figures 2 et 3.

∘ Modèle théorique pour flux incident axial

En référence à la figure 2, on considère tout d'abord une hélice H, de diamètre D, comportant une pluralité d'aubes ayant chacune un bord d'attaque BA et un bord de fuite BF, l'angle de calage β de l'aube de l'hélice H étant défini entre le plan de rotation et la corde moyenne du profil.

Dans un premier temps, on suppose que l'hélice H est entraînée par un flux d'air incident purement axial de vitesse $V_z$. Par la suite, la densité volumique de l'air est désignée $\rho$. De manière classique, le vecteur vitesse périphérique u de l'hélice H est défini par la formule suivante : $u = N \cdot D$, le paramètre N correspondant à la vitesse de rotation de l'hélice.

De manière connue, les coefficients adimensionnels d'un champ d'hélice dans un flux incident axial sont définis par les formules suivantes pour une vitesse de rotation u donnée:

$$(1) \qquad C_T(\beta) = \frac{T(\beta)}{\rho \cdot N^2 \cdot D^4} = \frac{T(\beta)}{\rho \cdot u^2 \cdot D^2}$$

$$(2) \qquad C_P(\beta) = \frac{P(\beta)}{\rho \cdot N^3 \cdot D^5} = \frac{P(\beta)}{\rho \cdot u^3 \cdot D^2}$$

$$(3) \qquad J = \frac{v_z}{N \cdot D} = \frac{v_z}{u}$$

Dans ces formules, le paramètre T correspond à la traction de l'hélice H tandis que le paramètre P correspond à la puissance de l'hélice H. Les coefficients adimensionnels CT et CP ainsi définis sont des fonctions de l'angle de calage β. Ainsi, grâce au modèle théorique M de l'hélice H, on connaît la puissance P et la traction T pour une vitesse de rotation u et un angle de calage β donnés en fonction de la vitesse axiale $V_z$ du flux incident.

∘ Modèle théorique général pour flux incident axial et tangentiel

On considère maintenant une alimentation de l'hélice H par un flux d'air incident dont la vitesse V comporte une composante axiale $V_z$ et une composante tangentielle $V_\Theta$ de sorte que $\vec{v} = \vec{v}_z + \vec{v}_\theta$ comme représenté sur la figure 3. Par la suite, la composante tangentielle $V_\Theta$ est comptée positivement dans le sens de la vitesse de rotation u de l'hélice H.

En référence à la figure 3, par application du triangle des vitesses, on obtient la norme w de la vitesse relative vue par le profil d'aube :

$$(4) \qquad w^2 = (\vec{v} - \vec{u})^2 = v^2 + u^2 - 2 \cdot \vec{u} \cdot \vec{v} = v_z^2 + (u - v_\theta)^2$$

Par comparaison à la définition des coefficients adimensionnels J, CP et CT définis pour une alimentation uniquement axiale, on en déduit que :

- $u - v_\theta$ joue le rôle de $u$ auparavant dans les formules 1 à 3 ;
- $v_z$ joue le rôle de $v_z$ auparavant dans la formule 1.

Par analogie avec le modèle théorique M selon l'art antérieur, on en déduit un modèle théorique généralisé Mg dont les coefficients généralisé Jg, CPg et CTg sont définis comme suit :

$$(5) \quad C_{Tg}(\beta) = \frac{T(\beta)}{\rho \cdot (u - v_\theta)^2 \cdot D^2}$$

$$(6) \quad C_{Pg}(\beta) = \frac{P(\beta)}{\rho \cdot (u - v_\theta)^3 \cdot D^2}$$

$$Jg = \frac{v_z}{u - v_\theta}$$
$$(7)$$

De préférence, les composantes $u$, $v_z$ et $v_\theta$ sont définies pour une hauteur moyenne de l'aube de l'hélice.

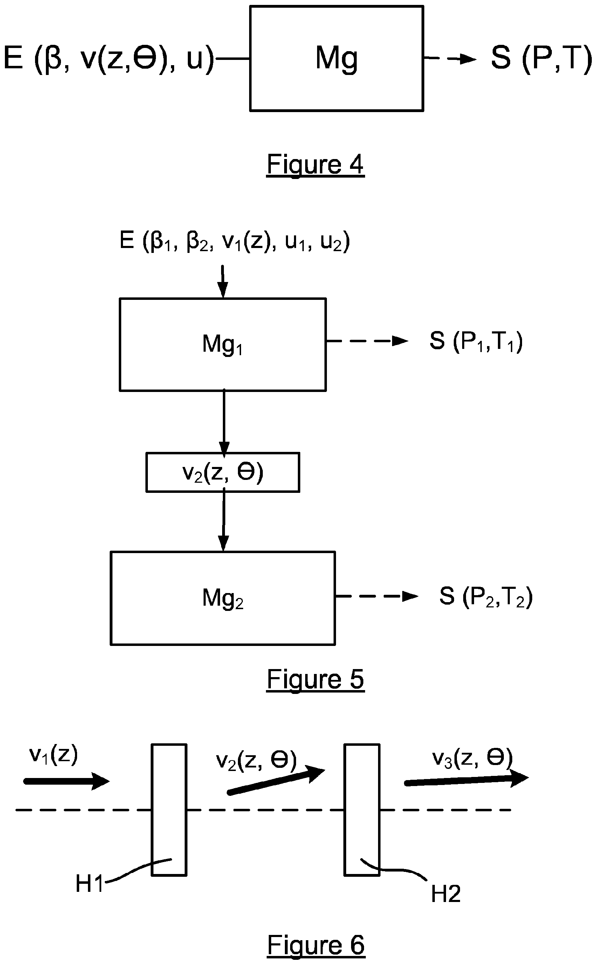

Les coefficients généralisés Jg, CTg, CPg obtenus précédemment permettent de former un modèle théorique généralisé Mg dont la forme est similaire à un modèle selon l'art antérieur pour être utilisé dans un procédé de détermination des performances en temps réel d'une turbomachine. Grâce à un tel modèle généralisé, on peut déterminer les performances d'une hélice pour tout type de flux incident et, en particulier, un flux incident comportant une composante tangentielle. En référence à la figure 4, l'hélice est modélisée par un modèle théorique Mg dont les coefficients généralisés Jg, CTg, CPg sont définis par une pluralité d'angles de calage β, pour une pluralité de vitesses périphériques de rotation hélice u et pour toute vitesse incidente V(V_z, V_Θ). Cela est particulièrement avantageux pour déterminer les performances d'un doublet d'hélices comme cela est détaillé par la suite.

## • Détermination des performances d'un doublet d'hélices

Le procédé de détermination des performances d'une turbomachine comportant une première hélice amont H1 et une deuxième hélice aval H2 formant un doublet d'hélices contrarotatives va être détaillé ci-après en référence aux figures 5 et 6. Tout d'abord, on modélise chaque hélice H1, H2 du doublet par un modèle théorique généralisé Mg comme présenté précédemment.

De manière classique, la première hélice amont H1 reçoit un flux incident axial $V_1(z)$, le dévie par giration. La deuxième hélice aval H2 reçoit alors un flux incident comportant une composante axiale et tangentielle $V_2(z,\Theta)$ du fait de la giration de la première hélice amont H1 (Figure 6).

En référence à la figure 5, la première hélice amont H1 est modélisée par un premier modèle théorique généralisé $Mg_1$ tandis que la deuxième hélice aval H2 est modélisée par un deuxième modèle théorique généralisé $Mg_2$. Les hélices H1, H2 reçoivent respectivement des flux incidents $V_1$, $V_2$ pour des angles de calage $\beta_1$, $\beta_2$.

La détermination des performances de la première hélice H1 est classique et permet de déterminer en sortie S la puissance $P_1$ et la traction $T_1$ de la première hélice H1 au moyen du premier modèle généralisé $Mg_1$ pour un flux d'air axial $V_1(z)$.

Pour déterminer la puissance $P_2$ et la traction $T_2$ de la deuxième hélice H2 au moyen du deuxième modèle généralisé $Mg_2$, il est nécessaire de connaître les composantes axiale $V_2(z)$ et tangentielle $V_2(\Theta)$ (ou $v_\theta$) du flux d'air incident reçu par la deuxième hélice H2, après parcours de la distance séparant la deuxième hélice H2 de la première hélice H1. La composante tangentielle $V_2(\Theta)$ du flux d'air incident reçu par la deuxième hélice H2 peut être obtenue par application du théorème d'Euler (relation fondamentale des machines tournantes) sur la première hélice amont H1. Dans ce théorème, $\Delta H$ correspond à la variation d'enthalpie à la traversée de l'hélice H1.

$$\Delta H = \Delta(\vec{u}.\vec{v}_z) = (\vec{u}.\vec{v}_z)_{sortie} - \underbrace{(\vec{u}.\vec{v}_z)_{entree}}_{=0\,(\text{alimentation axiale})} = u.V_2(\theta)$$
$$(8)$$

$$(9) \quad V_2(\theta) = \frac{\Delta H}{u}$$

La connaissance de la variation d'enthalpie $\Delta H$ à la traversée de la première hélice H1 permet de déduire la composante tangentielle $v_\theta$ de l'écoulement en sortie. En appliquant le premier principe de la thermodynamique à la transformation appliquée à l'écoulement lors de la traversée de la première hélice H1, supposée adiabatique, la variation d'enthalpie $\Delta H$ peut être reliée à la puissance développée $P_1$ par la transformation et au débit massique W traité lors de la transformation :

$$(10) \qquad P_1 = W.\Delta H$$

$$(11) \qquad V_2(\theta) = \frac{P_1}{W.u_1}$$

La puissance $P_1$ est déterminable sur la base des coefficients adimensionnels du premier modèle théorique généralisé $Mg_1$ de la première hélice H1 qui reçoit un flux d'air axial $V_1(z)$. Pour estimer le débit massique traité par la première hélice H1, on applique la théorie simplifiée de Froude, généralement considérée pour la modélisation 2D des écoulements d'hélices. Cette théorie, basée sur l'hypothèse d'un écoulement incompressible et sur la représentation de l'hélice comme une surface de discontinuité de pression, permet d'exprimer la variation de vitesse à la traversée de l'hélice et par conséquent le débit massique traité W.

Le calcul du débit résultant de l'application de cette théorie est le suivant :

$$(12) \qquad W = \rho.S.Vt$$

Dans cette formule, le paramètre Vt représente la vitesse à la traversée de la première hélice H1 et le paramètre S représente la surface du disque d'action de l'hélice, assimilable à Pi $D^2/4$.

D'après la théorie de Froude, cette vitesse Vt est égale à la moitié de l'augmentation de vitesse globale conduisant de la vitesse d'entrée $V_1$ à la vitesse de sortie $V_2$ de la première hélice H1 telle que :

$$(13) \qquad Vt = \frac{V_2(z) + V_1(z)}{2}$$

$$(14) \qquad V_2(z) = \sqrt{\frac{2.T_1}{\rho.S} + V_1(z)^2} \quad .$$

On obtient ainsi le débit massique traité W comme suit :

$$(15) \qquad W = \rho.S.\left(\frac{V_2(z) + V_1(z)}{2}\right) = \frac{\rho.S}{2}\left[\sqrt{\frac{2.T_1}{\rho.S} + V_1(z)^2} + V_1(z)\right]$$

Pour la première hélice, la vitesse d'entrée $V_1$ est égale à $V_1(z)$. La valeur de la composante tangentielle $v_\theta$ recherchée est égale à

$$(16) \qquad V_2(\theta) = \frac{P_1}{\dfrac{\rho.S.u_1}{2}\left[\sqrt{\dfrac{2.T_1}{\rho.S} + V_1(z)^2} + V_1(z)\right]}$$

Ainsi, la composante tangentielle $V_2(\theta)$ reçue par la deuxième hélice H2 est déterminable de manière analytique ce qui permet de déterminer de manière directe et en temps réel les performances la deuxième hélice H2 au moyen du

deuxième modèle généralisé $Mg_2$ comme représenté sur la figure 5.

Toutes les conditions d'entrée étant connues, on en déduit la puissance $P_2$ et la traction $T_2$ fournies par la deuxième hélice H2 du doublet. On détermine les performances globales de puissance et de traction pour le doublet d'hélices H1, H2. Cette détermination peut avantageusement être réalisée en temps réel ce qui présente des avantages en termes de durée et de coût d'un cycle de développement d'un doublet d'hélices.

Il a été présenté précédemment une mise en oeuvre du procédé selon l'invention au sein d'un calculateur au sol pour la conception d'une turbomachine mais il va de soi que le calculateur pourrait également être embarqué.

De manière avantageuse, un calculateur de régulation de la turbomachine, par exemple, du type FADEC pour « Full Authority Digital Engine Control », permet la mise en oeuvre du procédé précité afin de prédire l'angle de calage requis pour satisfaire une consigne de rotation des hélices prédéterminée. Ainsi, si un pilote de l'aéronef sur lequel est montée la turbomachine envoie une consigne de vitesses d'hélices à la turbomachine, le calculateur de régulation permet de définir les angles de calage optimaux de manière à ce que la turbomachine réagisse à la consigne de manière précise et réactive ce qui est avantageux.

En pratique, les modèles théoriques généralisés sont définis dans le calculateur de régulation afin d'assurer une régulation des angles de calage des hélices. Le temps de réaction est amélioré étant donné que les angles de calage sont définis de manière prédictive à l'aide des modèles théoriques implantés dans le calculateur de régulation.

Ainsi, le calculateur de régulation de la turbomachine permet de contrôler de manière globale et simultanée les deux hélices ce qui diffère de l'art antérieur dans lequel les hélices étaient gérées indépendamment.

**Revendications**

1. Procédé de détermination des performances d'au moins une hélice aval de turbomachine placée derrière une hélice amont de même axe créant pour ladite hélice aval un flux d'air incident (V) en giration comportant une composante axiale ($V_z$) et une composante tangentielle (Ve), ladite hélice aval étant modélisée par un modèle théorique généralisé ($M_g$) défini, pour une pluralité d'angles de calage ($\beta$) de l'hélice aval, par un ensemble de coefficients adimensionnels dont au moins un coefficient d'avancement généralisé ($J_g$), un coefficient de puissance généralisé ($CP_g$) et un coefficient de traction généralisé ($CT_g$) définis par les formules suivantes :

$$\begin{cases} J_g = \dfrac{v_z}{u - v_\theta} \\[2mm] C_{Tg}(\beta) = \dfrac{T(\beta)}{\rho \cdot (u - v_\theta)^2 \cdot D^2} \\[2mm] C_{Pg}(\beta) = \dfrac{P(\beta)}{\rho \cdot (u - v_\theta)^3 \cdot D^2} \end{cases}$$

formules dans lesquelles :

- u correspond à la vitesse d'entraînement de ladite hélice aval,
- $V_z$ correspond à la composante axiale de la vitesse du flux d'air incident ;
- Ve correspond à la composante tangentielle du flux d'air incident, comptée positivement dans le sens de la vitesse d'entraînement u ;
- $\rho$ correspond à la masse volumique de l'air,
- D correspond au diamètre de ladite hélice aval ;
- T correspond à la traction de ladite hélice aval ;
- P correspond à la puissance de ladite hélice aval ;
- $\beta$ correspond à l'angle de calage de ladite hélice aval ;

procédé dans lequel :

- on paramètre au moyen d'un calculateur physique, le modèle théorique généralisé ($M_g$) de ladite hélice aval avec des conditions d'entrée de la turbomachine dont au moins la composante axiale (Vz), la composante tangentielle de la vitesse du flux d'air incident (Ve), l'angle de calage ($\beta$) et la vitesse d'entraînement (u) de ladite hélice aval ; et

- on déduit du modèle théorique généralisé ($M_g$) paramétré au moyen du calculateur physique, au moins les performances de traction (T) et de puissance (P) de ladite hélice aval ;
- on régule, au moyen du calculateur physique, l'angle de calage de l'hélice amont ou de l'hélice aval en se basant sur au moins les performances de traction (T) et de puissance (P) de ladite hélice aval déduites.

2. Procédé de détermination des performances d'une turbomachine comportant une première hélice amont (H1) et une deuxième hélice aval (H2) formant un doublet d'hélices contrarotatives, les première et deuxième hélices (H1, H2) étant respectivement modélisées par un premier modèle théorique généralisé ($Mg_1$) et un deuxième modèle théorique généralisé ($Mg_2$) définis selon la revendication 1, procédé dans lequel :

- on paramètre les modèle théoriques généralisés ($M_{g1}$, $M_{g2}$) avec des conditions d'entrée de la turbomachine dont au moins la composante axiale ($V_1(z)$) du flux d'air incident ($V_1$) de la première hélice (H1), la vitesse d'entraînement ($u_1$) de la première hélice (H1) et la vitesse d'entraînement ($u_2$) de la deuxième hélice ($H_2$), les angles de calage ($\beta1$) de la première hélice ($H_1$) et ($\beta2$) de la deuxième hélice ($H_2$) ;
- on déduit du premier modèle théorique généralisé ($M_{g1}$) paramétré au moins les performances de traction ($T_1$) et de puissance ($P_1$) de la première hélice ($H_1$) ;
- on calcule les composantes tangentielle ($V_2(\theta)$) et axiale ($V_2(z)$) du flux d'air incident ($V_2$) reçu par la deuxième hélice ($H_2$) en fonction des performances de traction ($T_1$) et de puissance ($P_1$) de la première hélice ($H_1$) ; et
- on déduit du deuxième modèle théorique généralisé ($Mg_2$) paramétré au moins les performances de traction ($T_2$) et de puissance ($P_2$) de la deuxième hélice ($H_2$) en fonction des conditions d'entrée et des composantes tangentielle ($V_2(\theta)$) et axiale ($V_2(z)$) du flux d'air incident ($V_2$) reçu par la deuxième hélice ($H_2$).

3. Procédé de détermination selon la revendication 2, dans lequel la composante tangentielle ($V_2(\theta)$) du flux d'air incident ($V_2$) reçu par la deuxième hélice ($H_2$) est obtenue par la formule suivante :

$$V_2(\theta) = \frac{P_1}{\dfrac{\rho.S.u_1}{2}\left[\sqrt{\dfrac{2.T_1}{\rho.S} + V_1(z)^2} + V_1(z)\right]}$$

et la composante axiale ($V_2(z)$) du flux d'air incident ($V_2$) reçu par la deuxième hélice ($H_2$) est obtenue par la formule suivante :

$$V_2(z) = \sqrt{\frac{2.T_1}{\rho.S} + V_1(z)^2}$$

formules dans lesquelles S correspond à la surface du disque d'action de la première hélice (H1).

4. Procédé de détermination selon l'une des revendications 1 à 3, dans lequel le procédé est mis en oeuvre par un calculateur physique au sol.

5. Procédé de détermination selon l'une des revendications 1 à 3, dans lequel le procédé est mis en oeuvre par un calculateur physique embarqué dans la turbomachine.

6. Procédé de détermination selon la revendication 4, dans lequel le procédé est mis en oeuvre par un calculateur de régulation du type FADEC.

**Patentansprüche**

1. Verfahren zum Bestimmen der Kenngrößen mindestens einer stromabwärtigen Schraube eines Turbostrahltriebwerks, die hinter einer stromaufwärtigen Schraube mit gleicher Achse platziert ist, welche für die stromabwärtige Schraube einen rotierenden einströmenden Luftstrom (V) erzeugt, der eine Axialkomponente ($V_z$) und eine Tangentialkomponente ($V_\theta$) umfasst, wobei die stromabwärtige Schraube durch ein definiertes verallgemeinertes theoretisches Modell ($M_g$) modelliert wird, das für eine Vielzahl von Feststellpositionswinkeln ($\beta$) der stromabwärtigen

Schraube durch einen Satz dimensionsloser Koeffizienten definiert ist, darunter mindestens ein verallgemeinerter Vorschubkoeffizient ($J_g$), ein verallgemeinerter Leistungskoeffizient ($CP_g$) und ein verallgemeinerter Traktionskoeffizient ($CT_g$), die durch die folgenden Formeln definiert sind:

$$\begin{cases} J_g = \dfrac{v_z}{u - v_\theta} \\[2ex] C_{Tg}(\beta) = \dfrac{T(\beta)}{\rho \cdot (u - v_\theta)^2 \cdot D^2} \\[2ex] C_{Pg}(\beta) = \dfrac{P(\beta)}{\rho \cdot (u - v_\theta)^3 \cdot D^2} \end{cases}$$

wobei in diesen Formeln:

- u der Antriebsgeschwindigkeit der stromabwärtigen Schraube entspricht,
- $V_z$ der Axialkomponente der Geschwindigkeit des einströmenden Luftstroms entspricht;
- $V_\theta$ der Tangentialkomponente des einströmenden Luftstroms, in der Richtung der Antriebsgeschwindigkeit u positiv gezählt, entspricht;
- $\rho$ der Dichte der Luft entspricht,
- D dem Durchmesser der stromabwärtigen Schraube entspricht;
- T der Traktion der stromabwärtigen Schraube entspricht;
- P der Leistung der stromabwärtigen Schraube entspricht;
- $\beta$ dem Feststellpositionswinkel der stromabwärtigen Schraube entspricht;

wobei bei dem Verfahren:

- das verallgemeinerte theoretische Modell ($M_g$) der stromabwärtigen Schraube mittels eines physischen Rechners mit Eingangsbedingungen des Turbostrahltriebwerks parametrisiert wird, darunter mindestens die Axialkomponente (Vz), die Tangentialkomponente der Geschwindigkeit des einströmenden Luftstroms (Ve), der Feststellpositionswinkel ($\beta$) und die Antriebsgeschwindigkeit (u) der stromabwärtigen Schraube; und
- aus dem mittels des physischen Rechners parametrisierten verallgemeinerten theoretischen Modell ($M_g$) mindestens die Kenngrößen der Traktion (T) und der Leistung (P) der stromabwärtigen Schraube abgeleitet werden;
- mittels des physischen Rechners der Feststellpositionswinkel der stromaufwärtigen Schraube oder der stromabwärtigen Schraube auf Basis mindestens der abgeleiteten Kenngrößen der Traktion (T) und der Leistung (P) der stromabwärtigen Schraube geregelt wird.

2. Verfahren zum Bestimmen der Kenngrößen eines Turbostrahltriebwerks, das eine erste stromaufwärtige Schraube (H1) und eine zweite stromabwärtige Schraube (H2) umfasst, die ein gegenläufiges Schraubenpaar bilden, wobei die erste und die zweite Schraube (H1, H2) jeweils durch ein erstes verallgemeinertes theoretisches Modell ($Mg_1$) und ein zweites verallgemeinertes theoretisches Modell ($Mg_2$), die nach Anspruch 1 definiert sind, modelliert werden, wobei bei dem Verfahren:

- die verallgemeinerten theoretischen Modelle ($M_{g1}$, $M_{g2}$) mit Eingangsbedingungen des Turbostrahltriebwerks parametrisiert werden, darunter mindestens die Axialkomponente ($V_1(z)$) des einströmenden Luftstroms ($V_1$) der ersten Schraube (H1), die Antriebsgeschwindigkeit ($u_1$) der ersten Schraube (H1) und die Antriebsgeschwindigkeit ($u_2$) der zweiten Schraube ($H_2$), die Feststellpositionswinkel ($\beta1$) der ersten Schraube ($H_1$) und ($\beta2$) der zweiten Schraube ($H_2$);
- aus dem parametrisierten ersten verallgemeinerten theoretischen Modell ($M_{g1}$) mindestens die Kenngrößen der Traktion ($T_1$) und der Leistung ($P_1$) der ersten Schraube ($H_1$) abgeleitet werden;
- die Tangential- ($V_2(\theta)$) und die Axialkomponente ($V_2(z)$) des von der zweiten Schraube ($H_2$) aufgenommenen einströmenden Luftstroms ($V_2$) in Abhängigkeit von den Kenngrößen der Traktion ($T_1$) und der Leistung ($P_1$) der ersten Schraube($H_1$) berechnet werden; und
- aus dem parametrisierten zweiten verallgemeinerten theoretischen Modell ($Mg_2$) mindestens die Kenngrößen der Traktion ($T_2$) und der Leistung ($P_2$) der zweiten Schraube ($H_2$) in Abhängigkeit von den Eingangsbedingungen

und der Tangential- ($V_2(\theta)$) und der Axialkomponente ($V_2(z)$) des von der zweiten Schraube ($H_2$) aufgenommenen einströmenden Luftstroms ($V_2$) abgeleitet werden.

3. Bestimmungsverfahren nach Anspruch 2, wobei die Tangentialkomponente ($V_2(\theta)$) des von der zweiten Schraube ($H_2$) aufgenommenen einströmenden Luftstroms ($V_2$) durch die folgende Formel erhalten wird:

$$V_2(\theta) = \frac{P_1}{\dfrac{\rho.S.u_1}{2}\left[\sqrt{\dfrac{2.T_1}{\rho.S}+V_1(z)^2}+V_1(z)\right]}$$

und die Axialkomponente ($V_2(z)$) des von der zweiten Schraube ($H_2$) aufgenommenen einströmenden Luftstroms ($V_2$) durch die folgende Formel erhalten wird:

$$V_2(z) = \sqrt{\frac{2.T_1}{\rho.S}+V_1(z)^2}$$

wobei in diesen Formeln S der Fläche der Wirkscheibe der ersten Schraube (H1) entspricht.

4. Bestimmungsverfahren nach einem der Ansprüche 1 bis 3, wobei das Verfahren von einem physischen Rechner am Boden umgesetzt wird.

5. Bestimmungsverfahren nach einem der Ansprüche 1 bis 3, wobei das Verfahren von einem physischen Rechner umgesetzt wird, der in dem Turbostrahltriebwerk integriert ist.

6. Bestimmungsverfahren nach Anspruch 4, wobei das Verfahren von einem Regelungsrechner vom Typ FADEC umgesetzt wird.

**Claims**

1. Method for determining the performance of at least one downstream propeller of a turbomachine placed behind an upstream propeller of the same axis creating for said downstream propeller an incident air stream (V) under gyration comprising an axial component ($V_z$) and a tangential component ($V_\theta$), said downstream propeller being modeled by a generalized theoretical model ($M_g$) defined, for a plurality of angles of pitch ($\beta$) of the propeller, by a set of non-dimensional coefficients including at least one generalized progress coefficient ($J_g$), a generalized power coefficient ($CP_g$) and a generalized traction coefficient ($CT_g$) defined by the following formulas:

$$\begin{cases} J_g = \dfrac{v_z}{u - v_\theta} \\[2ex] CT_g(\beta) = \dfrac{T(\beta)}{\rho \cdot (u - v_\theta)^2 \cdot D^2} \\[2ex] CP_g(\beta) = \dfrac{P(\beta)}{\rho \cdot (u - v_\theta)^3 \cdot D^2} \end{cases}$$

formulas wherein:

   - u corresponds to the speed of entrainment of said downstream propeller,
   - $V_z$ corresponds to the axial component of the speed of the incident air stream;
   - $V_\theta$ corresponds to the tangential component of the incident air stream, counted positively in the direction of the speed of entrainment u;

- $\rho$ corresponds to the density of the air,
- D corresponds to the diameter of said downstream propeller;
- T corresponds to the traction of said downstream propeller;
- P corresponds to the power said downstream propeller;
- $\beta$ corresponds to the angle of pitch of said downstream propeller;

method, wherein:

- parameterizing, with a physical calculator, the generalized theoretical model ($M_g$) of said downstream propeller with input conditions of the turbomachine including at least the axial component (Vz), the tangential component of the speed of the incident air stream ($V_\theta$), the angle of pitch ($\beta$) and the drive speed (u) of said downstream propeller; and
- deducing from the parameterized generalized theoretical model ($M_g$) with the physical calculator, at least the performance in traction (T) and in power (P) of said downstream propeller;
- adjusting, with the physical calculator, the angle of pitch of the upstream propeller or of the downstream propeller, based on at least the deduced performance in traction (T) and in power (P) of said downstream propeller.

2. Method of determining the performance of a turbomachine comprising a first upstream propeller (H1) and a second downstream propeller (H2) forming a pair of contra-rotating propellers, the first and second propellers (H1, H2) being respectively modeled by a first generalized theoretical model ($Mg_1$) and a second generalized theoretical model ($Mg_2$) defined according to claim 1, method wherein:

- parameterizing of the generalized theoretical models ($M_{g1}$, $M_{g2}$) with input conditions of the turbomachine including at least the axial component ($V_1(z)$) of the incident air stream ($V_1$) of the first propeller (H1), the drive speed ($u_1$) of the first propeller (H1) and the drive speed ($u_2$) of the second propeller (H2), the angles of pitch ($\beta1$) of the first propeller ($H_1$) and ($\beta2$) of the second propeller ($H_2$);
- deducing from the first parameterized generalized theoretical model ($M_{g1}$) at least the performance in traction ($T_1$) and in power ($P_1$) of the first propeller ($H_1$);
- calculating the tangential ($V_2(\theta)$) and axial ($V_2(z)$) components of the incident air stream ($V_2$) received by the second propeller (H2) according to the performance in traction ($T_1$) and in power ($P_1$) of the first propeller ($H_1$); and
- deducing from the second parameterized generalized theoretical model ($M_{g2}$), at least the performance in traction ($T_2$) and in power ($P_2$) of the second propeller (H2) according to the input conditions and tangential ($V_2(\theta)$) and axial ($V_2(z)$) components of the incident air stream ($V_2$) received by the second propeller (H2).

3. Method of determining according to claim 2, wherein the tangential component ($V_2(\theta)$) of the incident air stream ($V_2$) received by the second propeller (H2) is obtained by the following formula:

$$V_2(\theta) = \frac{P_1}{\dfrac{\rho.S.u_1}{2}\left[\sqrt{\dfrac{2.T_1}{\rho.S} + V_1(z)^2} + V_1(z)\right]}$$

and the axial component ($V_2(z)$) of the incident air stream ($V_2$) received by the second propeller (H2) is obtained by the following formula:

$$V_2(z) = \sqrt{\dfrac{2.T_1}{\rho.S} + V_1(z)^2}$$

formulas wherein S corresponds to the surface of the actuator disk of the first propeller (H1).

4. Method of determining according to one of claims 1 to 3, wherein the method is implemented by a physical calculator on the ground.

5. Method of determining according to one of claims 1 to 3, wherein the method is implemented by a physical calculator

**EP 2 745 223 B1**

on board the turbomachine.

6. Method of determining according to claim 4, wherein the method is implemented by a control calculator of the FADEC type.

**13**

$$E\ (\beta, v_z, u) \longrightarrow \boxed{M} \longrightarrow S\ (P,T)$$

Figure 1

Figure 2

Figure 3

$E\ (\beta,\ v(z,\Theta),\ u)$ — Mg — $\rightarrow S\ (P,T)$

Figure 4

$E\ (\beta_1,\ \beta_2,\ v_1(z),\ u_1,\ u_2)$

$Mg_1$ — $\rightarrow S\ (P_1,T_1)$

$v_2(z,\ \Theta)$

$Mg_2$ — $\rightarrow S\ (P_2,T_2)$

Figure 5

$v_1(z)$ → | $v_2(z,\ \Theta)$ → | $v_3(z,\ \Theta)$ →

H1 — H2

Figure 6

**RÉFÉRENCES CITÉES DANS LA DESCRIPTION**

**Documents brevets cités dans la description**

- GB 220712 A